# EUROPÄISCHE PATENTSCHRIFT

(11) **EP 1 088 590 B1**
(45) Veröffentlichungstag und Bekanntmachung des Hinweises auf die Patenterteilung: **16.04.2003**
(21) Anmeldenummer: 00810855.7
(22) Anmeldetag: 20.09.2000
(51) Int. Cl.: B01L 3/00, C12Q 1/68, C12M 1/38, C12N 1/06

(54) **Thermocycler sowie Hebeelement für Mikrotiterplatte**
Thermocycling device and hoisting element for microtitre plate
Thermocycleur et élément de levage pour plaque de microtitrage

(30) Priorität: 29.09.1999 CH 178299
(43) Veröffentlichungstag der Anmeldung: 04.04.2001
(73) Patentinhaber: Tecan Trading AG, 8708 Männedorf (CH)
(72) Erfinder: Elsener, Donat, 8708 Männedorf (CH); Ryser, Daniel, 8712 Stäfa (CH)
(74) Vertreter: OK pat AG

(56) Entgegenhaltungen:
- EP-A- 0 810 030
- DE-A- 19 739 119
- US-A- 3 634 651
- US-A- 5 030 418
- US-A- 5 346 672

## Beschreibung

### Technisches Gebiet

Die Erfindung betrifft einen Thermocycler. Derartige Geräte werden dazu verwendet, den Inhalt der Kavitäten von Mikrotiterplatten Temperaturzyklen zu unterwerfen, die bestimmte chemische Reaktionen auslösen. Ausserdem betrifft sie ein Hebeelement zur Verwendung in Thermocyclern.

### Stand der Technik

Bei bekannten gattungsgemässen Thermocyclern besteht das Problem, dass die Mikrotiterplatte, die im Interesse eines guten Wärmeübergangs eng an der Heizfläche anliegt, häufig mit ihr verbäckt und dann nur sehr schwer wieder von ihr zu lösen ist. Dies macht entweder heikle manuelle Eingriffe nötig oder erfordert zur Aufbringung verhältnismässig grosser Kräfte von 150 N und mehr geeignete und entsprechend schwere und teure Handhabungsgeräte. Eine Abhilfemöglichkeit ist die Verwendung von Teflonspray, die ein Anbacken der Mikrotiterplatte verhindern kann. Sie muss jedoch bei jeder Platte wiederholt werden und kompliziert die Abläufe.

[002a] Aus DE 197 39 119 ist eine spezielle Mikrotiterplatte bekannt, welche vorzugsweise auf eine als Heizplatte ausgebildete Stabilisierungsplatte aufgesetzt wird. Dabei umfasst diese Heizplatte eine Heizfläche mit Vertiefungen, in welchen die Kavitäten dieser Mikrotiterplatte form- und kraftschlüssig aufgenommen werden. DE 197 39 119 offenbart zudem eine Auswurfvorrichtung in Form einer Auswurfplatte mit mindestens zwei, die Heizplatte durchdringenden Auswurfstiften zum Trennen und Abheben der Mikrotiterplatte von der Heizplatte. Diese gattungsgemässen Anordnung erscheint als zu teuer in der Herstellung und zu kompliziert in der Bedienung.

### Darstellung der Erfindung

Der Erfindung liegt die Aufgabe zu Grunde, einen bekannten gattungsgemässen Thermocycler so zu verbessern, dass die Mikrotiterplatten nach der Behandlung jeweils ohne besonderen Kraftaufwand abgehoben und entfernt werden können. Diese Aufgabe wird durch die Merkmale im Kennzeichen des Anspruchs 1 gelöst.

Es hat sich herausgestellt, dass die erfindungsgemässen Massnahmen bewirken, dass nach Abnehmen des Deckels die Mikrotiterplatte angehoben wird, was ein bequemes Fassen und Abheben derselben ohne Kraftaufwand ermöglicht. Dadurch ist gegebenenfalls die manuelle Entfernung der Mikrotiterplatte wesentlich erleichtert, vor allem aber kann sie auch ohne jeden manuellen Eingriff mittels Handhabungsgeräten des sonst im Laborbereich üblichen Typs erfolgen.

Weiter werden durch die Erfindung besonders geeignete Hebeelemente für erfindungsgemässe Thermocycler angegeben.

### Kurze Beschreibung der Zeichnungen

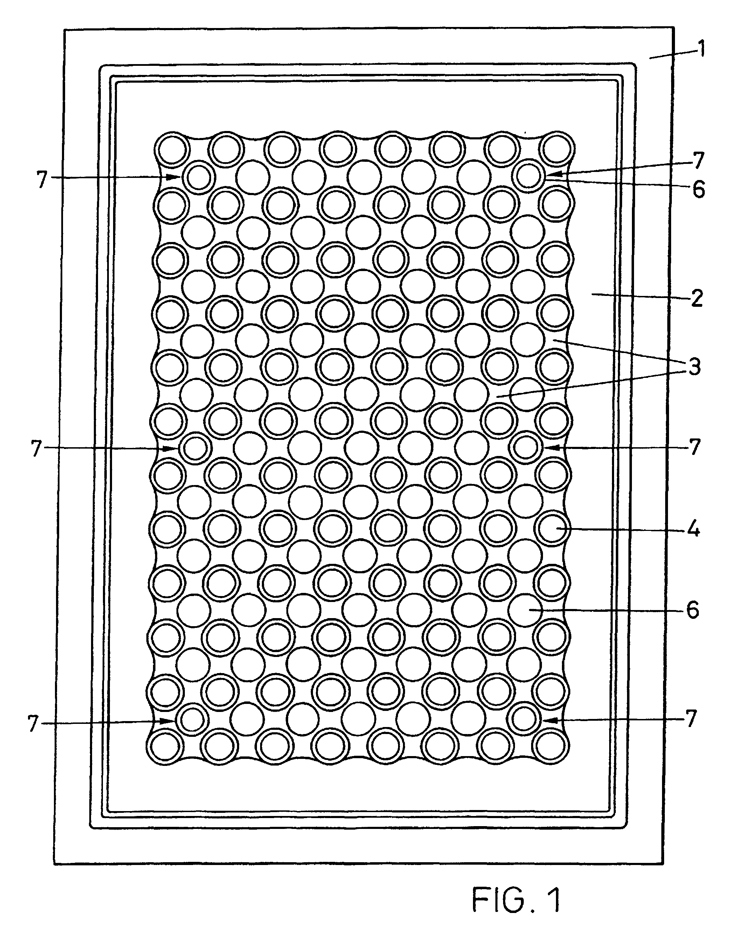

Im folgenden wird die Erfindung anhand von Figuren, welche lediglich ein Ausführungsbeispiel darstellen, näher erläutert. Es zeigen
- Fig. 1: eine Draufsicht auf die Heizplatte eines erfindungsgemässen Thermocyclers,
- Fig. 2: vergrössert einen Ausschnitt aus einer Draufsicht gemäss Fig. 1,
- Fig. 3: in perspektivischer Darstellung ein erfindungsgemässes Hebeelement,
- Fig. 4a: einen Schnitt längs IV-IV in Fig. 2, zusätzlich mit Mikrotiterplatte und Deckel und
- Fiig. 4b: einen Schnitt entsprechend Fig. 4a bei abgenommenem Deckel.

### Wege zur Ausführung der Erfindung

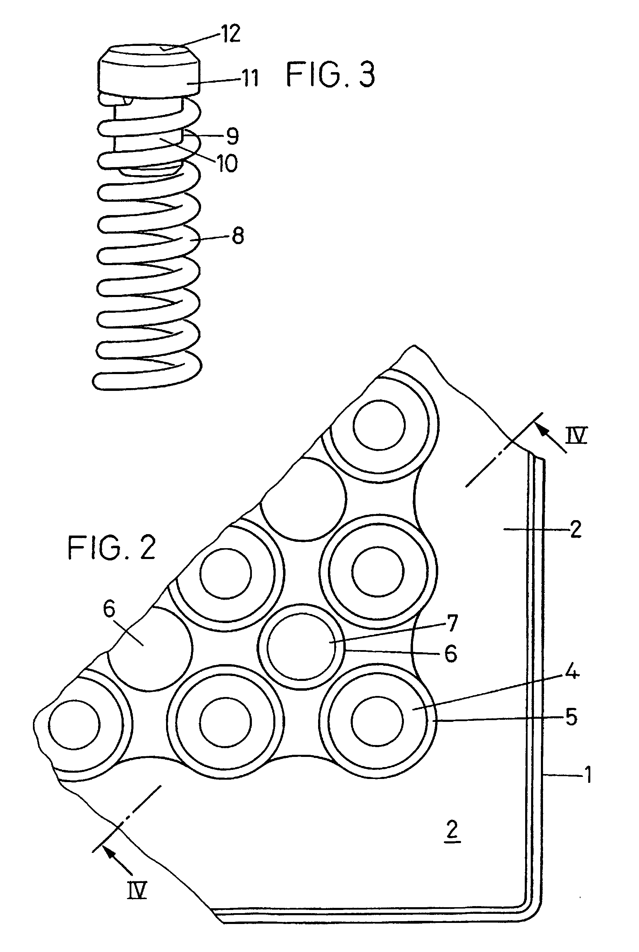

Der Thermocycler, der z. B. zur Aufnahme einer 8×12-Mikrotiterplatte der Dimension 85 mm × 130 mm geeignet sein kann, verfügt über eine Heizplatte 1, welche eine von einem Randstreifen 2 umgebene, demselben gegenüber etwas höhergelegte Heizfläche 3 bildet, in welcher in einem regelmässigen quadratischen Raster runde Vertiefungen 4 angeordnet sind, deren jede von einer umlaufenden, die Grundebene der Heizfläche 3 überragenden Wand 5 (Fig. 2) umgeben ist. Zwischen vier Vertiefungen 4 ist jeweils ein Sackloch 6 angebracht.

In insgesamt sechs der Sacklöcher 6 sind, etwa gleichmässig über die Heizfläche 3 verteilt, sechs Hebeelemente 7 angeordnet. Jedes der Hebeelemente 7 besteht (Fig. 3) aus einer zylindrischen Spiralfeder 8 aus rostfreiem Stahl, deren unterste Windung gegenüber den anderen etwas erweitert ist und einem Kontaktstift 9, dessen etwa zylindrischer Schaft 10 in das obere Ende der Spiralfeder 8 eingesteckt und durch Reibschluss in derselben festgehalten ist.

Der Schaft 10 trägt einen etwa scheibenförmigen Kopf 11, der ihn seitlich überragt und an dessen Unterseite das obere Ende der Spiralfeder 8 anstösst, während seine Oberseite eine runde ebene Stossfläche 12 bildet. Der Kontaktstift 9 ist rotationssymmetrisch und einstückig aus einem hitzebeständigen Kunststoff wie PEEK, PTFE, FP, PPS, PI z. B. im Spritzgussverfahren hergestellt. Er kann auch etwa aus Keramik bestehen, doch ist dann die Herstellung in der Regel aufwendiger und teurer. Der Kontaktstift 9 ist zwischen 3 mm und 8 mm, vorzugsweise ca. 6 mm lang. Der Durchmesser der Stossfläche 12 liegt zwischen 3 mm und 7 mm, vorzugsweise bei 5 mm.

Das Hebeelement 7 weist eine Länge von zwischen 15 mm und 20 mm, vorzugsweise von ca. 16 mm auf. Seine Federkonstante liegt in der entspannten Ruhestellung zwischen 5 N/mm und 7,5 N/mm, insbesondere bei 6 N/mm. In Anpassung an verschiedene Ausbildungen der Heizplatte und abhängig von der Dichte, mit der die Hebeelemente 7 auf der Heizfläche angeordnet sind und die im oben beschriebenen Fall bei 1 pro 18,4 cm² liegt und in der Regel mindestens 1 pro 30 cm² beträgt, können natürlich auch andere Dimensionen und Eigenschaften gewählt werden.

Die Spiralfeder 8 ist jeweils so dimensioniert, dass die etwas erweiterte unterste Windung im Sackloch 6 leicht radial zusammengedrückt ist, so dass zwischen derselben und der Wand des Sacklochs 6 Reibschluss besteht. Das Hebeelement 7 ist so ausreichend fixiert, kann aber trotzdem leicht entfernt werden. Die übrigen Windungen sind von der Wand des Sacklochs 6 frei, so dass die Kompression der Spiralfeder 8 nicht behindert ist.

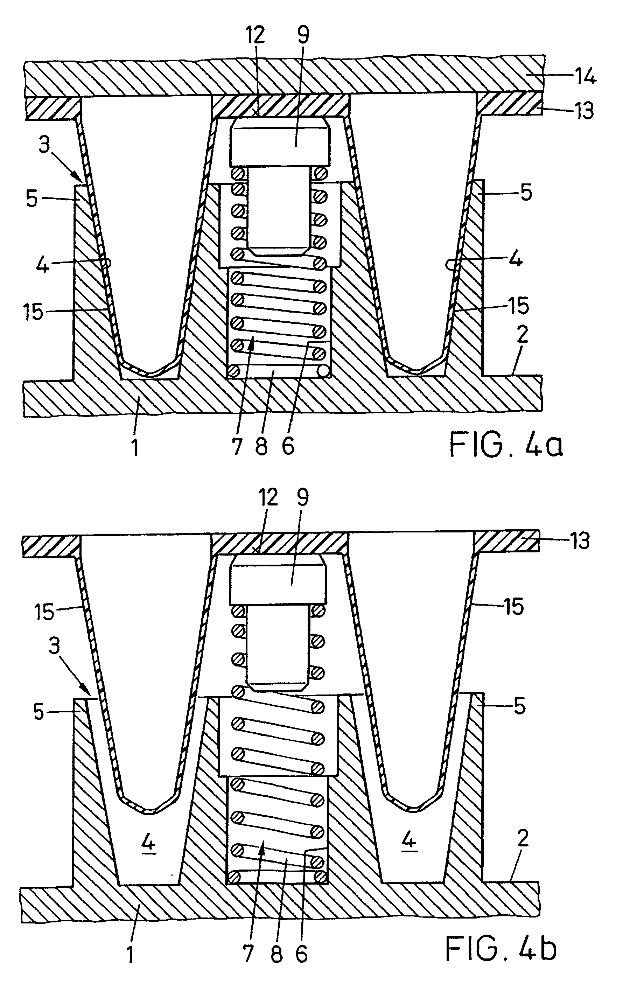

Beim Einsatz des Thermocyclers wird auf die Heizfläche 3 (Fig. 4a,b) manuell oder vorzugsweise mittels eines geeigneten Handhabungsgeräts, z. B. eines Robotarms eine Mikrotiterplatte 13, die gewöhnlich aus Kunststoff, z. B. Polypropylen besteht, aufgesetzt und ein klappbarer Deckel 14 des Thermocyclers auf dieselbe gesenkt, so dass jede ihrer Kavitäten 15 in eine entsprechende Vertiefung 4 gedrückt wird und an deren Wand anliegt (Fig. 4a). Damit ist ein guter Wärmeübergang zwischen der Heizplatte 1 und den Proben in den Kavitäten 15 gesichert. Die Spiralfedern 8 der Hebeelemente 7, die im entspannten Zustand ca. 6 mm über die Ränder der Wände 5 überstehen, werden dabei durch den Druck, den die Mikrotiterplatte 13 auf die Stossflächen 12 ihrer Kontaktstifte 9 ausübt, komprimiert und um 2 bis 3 mm verkürzt.

Nach der thermischen Behandlung der Proben in der Mikrotiterplatte 13, die z. B. zur Auslösung einer PCR-Reaktion eine grössere Anzahl Temperaturzyklen durchlaufen können, die jeweils beispielsweise aus einer Erwärmung von 4°C auf 96°C mit darauffolgender Abkühlung auf 4°C bestehen können, wird der Deckel 14 wieder hochgeklappt. Jedes der komprimierten Hebeelemente 7 übt eine nach oben gerichtete Kraft von ca. 15 N auf die Mikrotiterplatte 13 aus. Dies genügt, um allfällige Verbackungen zu lösen und, eventuell mit einer Verzögerung von einigen Sekunden, die Mikrotiterplatte 13 von der Heizfläche 3 abzuheben (Fig. 4b). Die so angehobene, mit der Heizfläche 3 nicht mehr verbundene Mikrotiterplatte 13 kann nun ohne weiteres und ohne grösseren Kraftaufwand abgenommen werden, was wiederum durch einen Robotarm geschehen kann.

Es hat sich gezeigt, dass es im allgemeinen genügt, wenn die Hebeelemente zusammen eine Kraft von ca. 0,8 N/cm², vorzugsweise 1 N/cm² auf die Mikrotiterplatte ausüben. Kontaktstifte aus PEEK haben sich insofern gut bewährt, als sie temperaturbeständig sind und nicht mit Mikrotiterplatten aus den üblichen Materialien wie Polypropylen verbacken, so dass der leichte Reibschluss genügt, um die Hebeelemente 7 in den Sacklöchern 6 festzuhalten.

Abgesehen von den Hebeelementen 7 kann der Thermocycler einem bekannten Typ, z. B. PTC 225 Tetrad der MJ Research, Inc. entsprechen. Es ist auch möglich, bekannte Thermocycler mit Hebeelementen nachzurüsten.

### Bezugszeichenliste

- 1: Heizplatte
- 2: Randstreifen
- 3: Heizfläche
- 4: Vertiefung
- 5: Wand
- 6: Sackloch
- 7: Hebeelement
- 8: Spiralfeder
- 9: Kontaktstift
- 10: Schaft
- 11: Kopf
- 12: Stossfläche
- 13: Mikrotiterplatte
- 14: Deckel
- 15: Kavität

## Patentansprüche

1. Thermocycler mit einer Heizplatte (1), welche eine Vertiefungen (4) aufweisende Heizfläche (3) zur Aufnahme einer Kavitäten (15) aufweisenden Mikrotiterplatte (13) umfasst, wobei die Kavitäten (15) der Mikrotiterplatte (13) in den Vertiefungen (4) der Heizfläche (3) aufgenommen werden und wobei der Thermocycler mehrere Hebeelemente zum Trennen und Anheben der Mikrotiterplatte von der Heizplatte umfasst, **dadurch gekennzeichnet, dass,** der Thermocycler einen gegenüber der Heizfläche (3) absenkbaren und anhebbaren Deckel (14) zum Andrücken der Mikrotiterplatte (13) an die Heizfläche (3) umfasst und dass die Hebeelemente als über die Heizfläche (3) verteilte, elastisch komprimierbare Hebeelemente (7) ausgebildet sind, welche mindestens bei abgehobenem Deckel (14) über die Ränder der Vertiefungen (4) überstehen.

2. Thermocycler nach Anspruch 1, **dadurch gekennzeichnet, dass** der Überstand der Hebeelemente (7) mindestens 2 mm, vorzugsweise mindestens 5 mm beträgt.

3. Thermocycler nach Anspruch 1 oder 2, **dadurch gekennzeichnet, dass** die Dichte der Hebeelemente (7) mindestens 1 pro 30 cm² beträgt.

4. Thermocycler nach einem der Ansprüche 1 bis 3, **dadurch gekennzeichnet, dass** jedes Hebeelement (7) an der Heizfläche (3) abnehmbar fixiert ist.

5. Thermocycler nach einem der Ansprüche 1 bis 4, **dadurch gekennzeichnet, dass** jedes Hebeelement (7) in ein Sackloch (6) in der Heizfläche (3) eingesetzt ist.

6. Thermocycler nach den Ansprüchen 4 und 5, **dadurch gekennzeichnet, dass** die Fixierung des Hebeelements (7) durch Reibschluss mit den Wänden des Sacklochs (6) hergestellt ist.

7. Thermocycler nach einem der Ansprüche 1 bis 6, **dadurch gekennzeichnet, dass** das Hebeelement (7) ein in Längsrichtung komprimierbares längliches Federelement umfasst, welches ein Kontaktteil trägt, das eine quer zur Längsrichtung orientierte Stossfläche (12) am oberen Ende des Hebeelementes bildet.

8. Thermocycler nach Anspruch 7, **dadurch gekennzeichnet, dass** das Kontaktteil aus Kunststoff, vorzugsweise PEEK, PTFE, FP, PPS oder PI besteht.

9. Thermocycler nach Anspruch 7 oder 8, **dadurch gekennzeichnet, dass** das Federelement als Spiralfeder (8) ausgebildet ist und das Kontaktteil als Kontaktstift (9), welcher einen vom oberen Teil der Spiralfeder (8) umgebenen Schaft (10) umfasst sowie einen seitlich auskragenden Kopf (11), der auf dem oberen Ende der Spiralfeder (8) aufsitzt und dessen Oberseite die Stossfläche (12) bildet.

10. Thermocycler nach Anspruch 9, **dadurch gekennzeichnet, dass** die unterste Windung der Spiralfeder (8) etwas erweitert ist.

11. Thermocycler nach Anspruch 9 oder 10, **dadurch gekennzeichnet, dass** der Kontaktstift (9) rotationssymmetrisch ausgebildet ist.

12. Thermocycler nach Anspruch 11, **dadurch gekennzeichnet, dass** sowohl der Schaft (10) als auch der Kopf (11) des Kontaktstiftes (9) im wesentlichen zylindrisch sind.

13. Thermocycler nach einem der Ansprüche 7 bis 12, **dadurch gekennzeichnet, dass** die Länge des Hebeelements (7) zwischen 15 mm und 20 mm und der Durchmesser der Stossfläche (12) mindestens 3 mm beträgt.

14. Thermocycler nach einem der Ansprüche 7 bis 13, **dadurch gekennzeichnet, dass** die Federkonstante des Hebeelements (7) mindestens 5 N/mm beträgt.

## Claims

1. Thermocycler with a heater plate (1) comprising a heating surface (3) incorporating cavities (4) and designed to take a microtitre plate (13) provided with wells (15), the wells (15) being accommodated in the cavities (4) in the heating surface (3), and the thermocycler possessing a number of lifting elements to separate and lift the microtitre plate from the heater plate, **characterized in that** the thermocycler possesses a lid (14) which can be lowered and raised relative to the heating surface (3) in order to press the microtitre plate (13) against the heating surface (3) and that the lifting elements are constituted as elastically compressible lifting elements (7) which are distributed over the heating surface (3) and which, at least when the lid (14) is raised, project above the edges of the cavities (4).

2. Thermocycler in accordance with Claim 1, **characterized in that** the height by which the lifting elements (7) project is at least 2 mm, preferably at least 5 mm.

3. Thermocycler in accordance with Claims 1 or 2, **characterized in that** the density of distribution of the lifting elements (7) is at least 1 per 30 cm².

4. Thermocycler in accordance with one of Claims 1 to 3, **characterized in that** each of the lifting elements (7) is fixed to the heating surface (3) in such a way as to be removable.

5. Thermocycler in accordance with one of Claims 1 to 4, **characterized in that** each of the lifting elements (7) is inserted in a blind hole (6) in the heating surface (3).

6. Thermocycler in accordance with Claims 4 and 5, **characterized in that** the means by which the lifting elements (7) are fixed is by friction against the walls of the blind holes (6).

7. Thermocycler in accordance with one of Claims 1 to 6, **characterized in that** the lifting element (7) comprises a longitudinally compressible spring element bearing a contact part which forms a thrust surface (12) at the upper end of the lifting element and transverse to its longitudinal axis.

8. Thermocycler in accordance with Claim 7, **characterized in that** the contact part is made from a synthetic material, preferably PEEK, PTFE, FP, PPS or PI.

9. Thermocycler in accordance with Claims 7 or 8, **characterized in that** the spring element is in the form of a coil spring (8) and the contact part in the form of a contact pin (9) comprising a stem (10) surrounded by the upper part of the coil spring (8) and a head (11) that extends outwards laterally and rests on the upper end of the coil spring (8) and whose upper surface constitutes the thrust surface (12).

10. Thermocycler in accordance with Claim 9, **characterized in that** the bottom turn of the coil spring (8) is slightly enlarged.

11. Thermocycler in accordance with Claims 9 or 10, **characterized in that** the contact pin (9) is rotationally symmetrical in shape.

12. Thermocycler in accordance with Claim 11, **characterized in that** both the stem (10) and the head (11) of the contact pin (9) are approximately cylindrical.

13. Thermocycler in accordance with one of Claims 7 to 12, **characterized in that** the length of the lifting element (7) is between 15 mm and 20 mm and the diameter of the thrust surface (12) is at least 3 mm.

14. Thermocycler in accordance with one of Claims 7 to 13, **characterized in that** the spring constant of the lifting element (7) is at least 5 N/mm.

## Revendications

1. Thermocycleur muni d'une plaque chauffante (1) constituée d'une surface chauffante (3) comportant des évidements (4), destinée à recevoir une plaque de microtitrage (13) dotée de cavités (15), les cavités (15) de la plaque de microtitrage (13) logeant dans les évidements (4) de la surface chauffante (3) et le thermocycleur comprenant plusieurs éléments de levage destinés à séparer et à soulever la plaque de microtitrage de la plaque chauffante, **caractérisé en ce que** le thermocycleur comporte un couvercle (14), pouvant être rabattu et relevé face à la surface chauffante (3), destiné à presser la plaque de microtitrage (13) contre la surface chauffante (3), et **en ce que** les éléments de levage sont constitués d'éléments de levage (7) répartis sur la surface chauffante (3) et compressibles de façon élastique, et qui dépassent au moins du bord des évidements (4) lorsque le couvercle (14) est relevé.

2. Thermocycleur conforme à la revendication 1, **caractérisé en ce que** les éléments de levage (7) dépassent d'au moins 2 mm et de préférence de 5 mm.

3. Thermocycleur conforme à la revendication 1 ou 2, **caractérisé en ce que** la densité des éléments de levage (7) est d'au moins 1 pour 30 cm².

4. Thermocycleur conforme à l'une des revendications 1 à 3, **caractérisé en ce que** chaque élément de levage (7) est fixé de façon amovible sur la surface chauffante (3).

5. Thermocycleur conforme à l'une des revendications 1 à 4, **caractérisé en ce que** chaque élément de levage (7) est placé dans un trou borgne (6) de la surface chauffante (3).

6. Thermocycleur conforme aux revendications 4 et 5, **caractérisé en ce que** la fixation de l'élément de levage (7) se fait à l'aide d'une fermeture par friction avec les parois du trou borgne (6).

7. Thermocycleur conforme à l'une des revendications 1 à 6, **caractérisé en ce que** l'élément de levage (7) comprend un élément de ressort oblong compressible dans le sens de la longueur et supportant un élément de contact qui forme, à l'extrémité supérieure de l'élément de levage, une surface d'about (12) orientée perpendiculairement au sens de la longueur.

8. Thermocycleur conforme à la revendication 7, **caractérisé en ce que** l'élément de contact est fait en matière plastique, de préférence du PEEK, du PTFE, du FP, du PPS ou du PI.

9. Thermocycleur conforme à la revendication 7 ou 8, **caractérisé en ce que** l'élément de ressort est conçu comme un ressort à spirale (8) et l'élément de contact comme une pointe de contact (9) qui comprend une tige (10) entourée par la partie supérieure du ressort à spirale (8) ainsi qu'une tête (11) saillant sur le côté, située sur l'extrémité supérieure du ressort à spirale (8) et dont la face supérieure constitue la surface d'about (12).

10. Thermocycleur conforme à la revendication 9, **caractérisé en ce que** la spire inférieure du ressort à spirale (8) est un peu élargie.

11. Thermocycleur conforme à la revendication 9 ou 10, **caractérisé en ce que** la pointe de contact (9) est à symétrie de révolution.

12. Thermocycleur conforme à la revendication 11, **caractérisé en ce que** aussi bien la tige (10) que la tête (11) de la pointe de contact (9) sont essentiellement cylindriques.

13. Thermocycleur conforme à l'une des revendications 7 à 12, **caractérisé en ce que** la longueur de l'élément de levage (7) est comprise entre 15 mm et 20 mm et le diamètre de la surface d'about (12) est d'au moins 3 mm.

14. Thermocycleur conforme à l'une des revendications 7 à 13, **caractérisé en ce que** la flexibilité de l'élément de levage (7) est d'au moins 5 N/mm.
